# EUROPÄISCHE PATENTANMELDUNG

(11) **EP 1 127 812 A1**
(43) Veröffentlichungstag der Anmeldung: **29.08.2001**
(21) Anmeldenummer: 01102896.6
(22) Anmeldetag: 15.02.2001
(51) Int. Cl.: B65G 11/20

(54) **Transporteinrichtung für Stückgüter**

(30) Priorität: 23.02.2000 DE 10008300
(71) Anmelder: PARSYS Produktionstechnik GmbH, 41061 Mönchengladbach (DE)
(72) Erfinder: Gesche, Günter, 41069 Mönchengladbach (DE); Klösges, Josef, 41066 Mönchengladbach (DE)

(57) **Zusammenfassung**

Die Erfindung betrifft eine Transporteinrichtung für Stückgüter (2), mit einem Transportbahnabschnitt (6), der Bremseinrichtungen (11) aufweist, die bei Bedarf in eine oberhalb der Transportebene (20) des Transportbahnabschnittes (6) liegende Bremsstellung verlagerbar sind.

Erfindungsgemäß sind die als Bremsbalken (11) ausgebildeten Bremseinrichtungen in entsprechenden Ausnehmungen (19) einer Bremsrutsche (6) gelagert und mittels einer Steuereinrichtung (26) definiert beaufschlagbar.
Die Steuereinrichtung (26) verarbeitet dabei Signale (i) einer wenigstens einen Zustand des Stückgutes (2) erfassenden Sensoreinrichtung (28).

## Beschreibung

Die Erfindung betrifft eine Transporteinrichtung für Stückgüter, gemäß dem Oberbegriff des Anspruches 1.

Derartige Transporteinrichtungen sind in verschiedenen Ausführungsformen bekannt und beispielsweise in der DE 43 09 222 A1, der DE 34 18 205 C2, der DE 41 11 154 C2 oder der EP 0 698 568 A1 ausführlich beschrieben.
Solche Transporteinrichtungen weisen im Bereich ihrer "normalen" Förderstrecken oft ein umlaufendes Fördermittel, zum Beispiel in Form eines Förderbandes, auf oder verfügen in diesen Transportabschnitten über antreibbare Transportrollen. Im Bereich von Entnahme- oder Bearbeitungsstationen sind diese bekannten Transporteinrichtungen außerdem oft mit Vorrichtungen zum staudruckarmen beziehungsweise staudruckfreien Speichern der Fördergüter ausgestattet.

Die in der DE 43 09 222 A1 beschriebene Staubahn verfügt dabei beispielsweise über einen am Staubahnende angeordneten, starren Endanschlag sowie eine in Förderrichtung vor dem Endanschlag angeordnete Stoppeinrichtung.
Die Stoppeinrichtung ist an einem Ende einer unterhalb der Förderebene zwischen dem starren Endanschlag und der Stoppeinrichtung verlaufende Wippe befestigt. Am anderen Ende der Wippe ist eine in Richtung auf den Endanschlag ansteigende, in der abgesenkten Stellung der Stoppeinrichtung oberhalb der Förderebene endende Auflaufschräge befestigt.

Die DE 34 18 205 C2 betrifft einen Staurollenförderer mit zwischen parallelen Seitenträgern angeordneten Förderrollen, die über je eine Rutschkupplung mit einem ständig umlaufenden Antriebselement verbunden sind.
Die gesamte Anlage ist in untereinander gleiche Segmente unterteilt.
An der Spitze jedes Segmentes ist ein Fühler, der unter dem Gewicht des Fördergutes verschwenkbar ist, und eine am Ende jedes Segmentes angeordnete Bremsbacke ansteuert.

Eine ähnliche Vorrichtung zum staudruckfreien Speichern von Stückgütern ist auch in der DE 41 11 154 C2 beschrieben.
Diese bekannte Einrichtung weist Förderbahnen mit einem kontinuierlich umlaufenden Fördermittel auf.
Zum staudruckfreien Speichern der Fördergüter sind an entsprechenden Speicherplätzen jeweils Hubplatten vorgesehen, die unter der Wirkung eines Hubmittels einen schräg aufwärts in Förderrichtung der Fördergüter geneigten Hub ausführen.
Zu diesem Zweck sind am Tragprofil Führungen mit schräg aufwärts geneigten Gleitflächen befestigt, auf denen die Hubplatten gleitend gelagert sind.
Die Wirkrichtung der Hubmittel ist dabei parallel zu den Gleitflächen gerichtet.
An der Hubplatte ist des weiteren ein Tastfühler befestigt, der von den Fördergütern betätigt wird.

Anstelle solcher mechanischer Tastfühler ist außerdem die Verwendung optischer Fühler bekannt.

Die EP 0 698 568 A2 beschreibt beispielsweise eine Einrichtung zum Erkennen von Fördergut auf Förderbahnen, insbesondere von Stückgut auf Rollenförderern, auf denen das Stückgut einzeln oder blockweise bewegbar ist.
Die Einrichtung, die mit Sendestrahlen arbeitet, ist mit Elektromagnetventilen zum Steuern von Hub- und/oder Stellantrieben einzelner Förderelemente verbunden. Zwischen den Förderelementen ist, im Abstand einer Stauplatzlänge, jeweils ein Baustein angeordnet, der aus einem Lichttaster und einem Elektromagnetventil besteht, die über eine Schaltbeziehungsweise Steuerlogik miteinander verbunden sind.

Die vorbeschriebenen, bekannten Einrichtungen sind, wie vorstehend bereits erwähnt, für das staudruckfreie bzw. staudruckarme Speichern von Stückgütern auf horizontalen Förderbahnabschnitten konzipiert, das bedeutet, diese Einrichtungen arbeiten mit Stückgütern, die mit einer vorgegebenen, konstanten Geschwindigkeit angeliefert werden.

Für einen Einsatz auf Gefällstrecken sind die bekannten Einrichtungen nicht ausgelegt und auch nicht geeignet.
Solche Gefällstrecken ergeben sich jedoch, wenn Stückgüter von einer höher angeordneten Transporteinrichtung auf eine tiefer liegende Transporteinrichtung überführt werden müssen. Im Bereich der geneigten Verbindungsstrecke kommt es dann in der Regel zu einer Beschleunigung der Stückgüter.
Die sich dabei einstellenden, oft recht unterschiedlichen Transportgeschwindigkeiten der einzelnen Stückgüter sind nicht zuletzt vom jeweiligen Gewicht des Stückgutes abhängig. Insbesondere bei schweren Stückgütern, die oft eine relativ hohe Geschwindigkeit erreichen können, kann es beim Auflaufen auf die nachgeordnete Transporteinrichtung zu großen Problemen kommen.

Ausgehend vom vorgenannten Stand der Technik liegt der Erfindung daher die Aufgabe zugrunde, eine Transporteinrichtung für Stückgüter zu schaffen, die eine problemlose Überführung unterschiedlich schwerer Transportgüter über abschüssige Verbindungsstrecken ermöglicht.

Diese Aufgabe wird erfindungsgemäß durch eine Vorrichtung gelöst, wie sie im Anspruch 1 beschrieben ist.

Vorteilhafte Ausgestaltungen der Erfindung sind Gegenstand der Unteransprüche.

Die erfindungsgemäße Transporteinrichtung ermöglicht in einfacher Weise, daß jedes einzelne auf einem abschüssigen Streckenabschnitt befindliche Stückgut zunächst sensorisch erfaßt und anschließend automatisch entsprechend seines Zustandes, insbesondere seiner augenblicklichen, gewichtsbedingten Geschwindigkeit, gezielt abgebremst wird. Das heißt, durch die erfindungsgemäße Bremseinrichtung, mit in Ausnehmungen einer Bremsrutsche schwenkbar gelagerten Bremsbalken, ist sichergestellt, daß alle Stückgüter, unabhängig von ihrer Größe und ihrem Gewicht, mit einer vorgebbaren Geschwindigkeit auf eine nachgeordnete Transporteinrichtung überführt werden.

Vorteilhafterweise weist die Bremsrutsche dabei die im Anspruch 2 beschriebene Ausbildung auf.
Durch gezieltes Ansteuern der einzelnen Bremsbalkenreihen ist es dabei möglich, sowohl relativ leichtes Stückgut als auch Stückgüter mit verhältnismäßig hohem Gewicht schonend auf eine vorgegebene, optimale Überführungsgeschwindigkeit herunterzubremsen.

In bevorzugter Ausführungsform sind die Bremsbalken jeweils um eine, in Transportrichtung des Stückgutes, vorne angeordnete Schwenkachse begrenzt drehbar gelagert. Die Bremsbalken können außerdemüber eine in Transportrichtung hinten liegende Schaltwelle einseitig angehoben werden.

Das heißt, die Bremsbalken bilden im angesteuerten, angehobenen Zustand eine Art Rampe, auf die das Stückgut aufgleiten kann (Anspruch 3).

Vorzugsweise werden, wie im Anspruch 4 dargelegt, die Bremsbalken einer Reihe jeweils über eine gemeinsame Schaltwelle betätigt. Eine solche Ausbildung vereinfacht und verbilligt nicht nur die Konstruktion, da nur ein Schubkolbengetriebe zur Betätigung einer Vielzahl von Bremsbalken benötigt wird, sondern gewährleistet auch ein stets gleichmäßiges Ausfahren und Positionieren der Bremsbalken einer Reihe.

Wie in den Ansprüchen 5 bis 7 dargelegt, weist vorteilhafterweise die Schaltwelle jeder Bremsbalkenreihe wenigstens ein Anschlußelement für ein Schubkolbengetriebe und ein Federelement sowie im Bereich der Bremsbalken jeweils Exzenterelemente auf. Die Anordnung ist dabei so getroffen, daß das Federelement die Schaltwelle permanent in eine Stellung zu drehen versucht, in der die Exzenterelemente die Bremsbalken anheben.

Diesem durch das Federelement eingeleiteten Drehmoment, steht ein durch das Schubkolbengetriebe initiierbares Moment entgegen, das die Bremsbalken bei Bedarf in einer Stellung fixiert, in der die Bremsbalken völlig oder teilweise eingefahren sind.
Das heißt, die Bremsbalken stehen, ohne entsprechende Beaufschlagung der Schaltwelle durch das Schubkolbengetriebe, stets in ihrer Bremsstellung.
Anstelle eines separaten Federelementes ist es auch möglich, ein entsprechendes Federelement direkt in das Schubkolbengetriebe zu integrieren. Auch bei derartig gestalteten Schubkolbengetrieben sind die Bremsbalken, wenn die Schubkolbengetriebe drucklos geschaltet sind, in ihrer Bremsstellung fixiert.

In vorteilhafter Ausgestaltung sind, wie in den Ansprüchen 8 und 9 beschrieben, die einzelnen Schubkolbengetriebe der Bremsbalkenreihen jeweils über separate Pneumatikleitungen mit einer Überdruckquelle verbunden.
In die Pneumatikleitungen sind dabei ansteuerbare Elektromagnetventile integriert, die über entsprechende Steuerleitungen an eine Steuereinrichtung angeschlossen sind. Das heißt, die Steuereinrichtung kann, in Abhängigkeit entsprechender Signale der Sensoreinrichtung, die Bremsbalkenreihen definiert ein- oder ausfahren. Auf diese Weise ist es möglich, die auf die einzelnen Stückgüter einzuleitende Bremskraft individuell anzupassen und zum Beispiel schwere Stückgüter sehr stark abzubremsen, während z.B. sehr leichte Stückgüter die Bremsrutsche nahezu ungebremst passieren.

Wie im Anspruch 10 angedeutet, ist wenigstens vor der ersten Bremsbalkenreihe eine Sensoreinrichtung angeordnet, die vorzugsweises die augenblickliche Geschwindigkeit des ankommenden Stückgutes erfaßt.
In Abhängigkeit von der ermittelten Geschwindigkeit werden anschließend über die Steuereinrichtung die in den Pneumatikleitungen angeordneten Elektromagnetventile angesteuert und die Bremsbalken gezielt aus- beziehungsweise eingefahren.

In bevorzugter Ausführungsform kann dabei vorgesehen werden, daß entsprechende Sensoreinrichtungen zur Ermittlung der Geschwindigkeit der Stückgüter, wie im Anspruch 11 angedeutet, vor jeder der Bremsbalkenreihe angeordnet sind.

In einem solchen Fall ist eine besonders feinfühlige Dosierung der einzuleitenden Bremskraft und damit ein schonendes Abbremsen des Stückgutes auf eine vorgebbare Geschwindigkeit möglich.

Anstelle von Sensoreinrichtungen zum Erfassen der jeweilige Geschwindigkeit des Stückgutes, ist auch der Einsatz alternativer Sensoreinrichtungen möglich.

Es ist beispielsweise durchaus denkbar, eine Sensoreinrichtung vorzusehen, die das Gewicht des betreffenden Stückgutes erfaßt (Anspruch 12) oder eine Sensoreinrichtung zu installieren, die auf eine entsprechende Kennzeichnung (Quellencode) am Stückgut reagiert (Anspruch 13).
Auch mit derartigen Sensoreinrichtungen, die selbstverständlich ebenfalls an die Steuereinrichtung angeschlossen sind, ist eine auf das jeweilige Stückgut angepaßte, genaue Einstellung der Bremskraft der Bremsrutsche möglich.

Weitere Einzelheiten der Erfindung sind einem nachfolgend anhand der Zeichnungen dargestellten Ausführungsbeispiel entnehmbar.

Es zeigt:
- Fig. 1: schematisch eine Vorderansicht auf zwei, jeweils in unterschiedlichen Höhen angeordnete Transporteinrichtungen, die durch eine abschüssige Anschlußstrecke, in die eine Bremsrutsche eingeschaltet ist, verbunden sind,
- Fig. 2: das Transportsystem gemäß Figur 1 in Draufsicht,
- Fig. 3: eine Bremsrutsche in einem größeren Maßstab, in Draufsicht,
- Fig. 4a: die Bremsrutsche mit eingefahrenem Bremsbalken, gemäß Schnitt IV-IV der Figur 3,
- Fig. 4b: die Bremsrutsche entsprechend Fig. 4a, jedoch mit ausgefahrenem Bremsbalken,
- Fig. 5a: ein Schubkolbengetriebe zum Betätigen der Bremsbalken, bei eingefahrenem Bremsbalken, gemäß Schnitt V-V der Fig.3,
- Fig. 5b: das Schubkolbengetriebe gemäß Fig.5a, bei ausgefahrenem Bremsbalken,

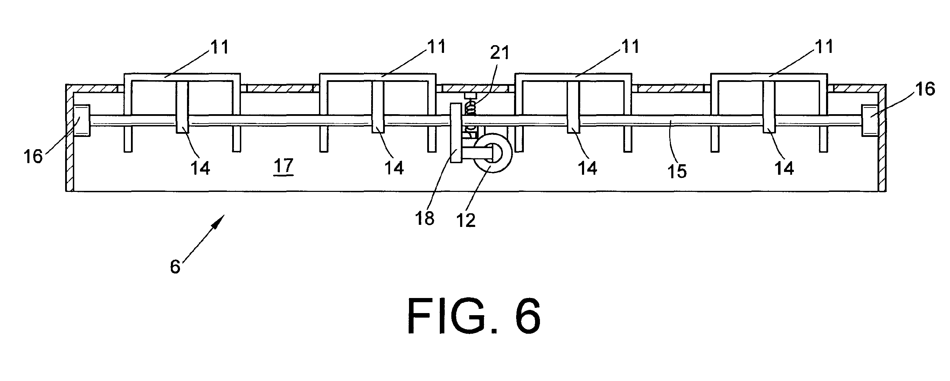

- Fig. 6: eine Vorderansicht der Bremsrutsche, gemäß Schnitt VI-VI der Figur 3.

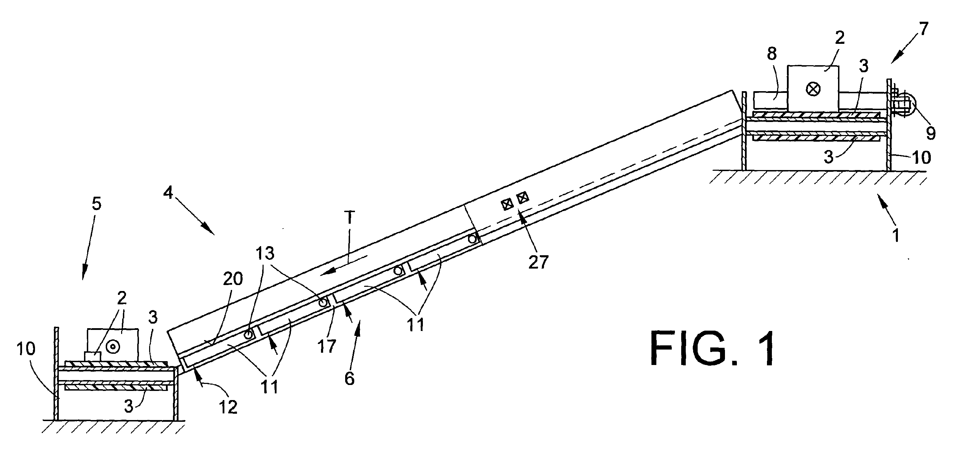

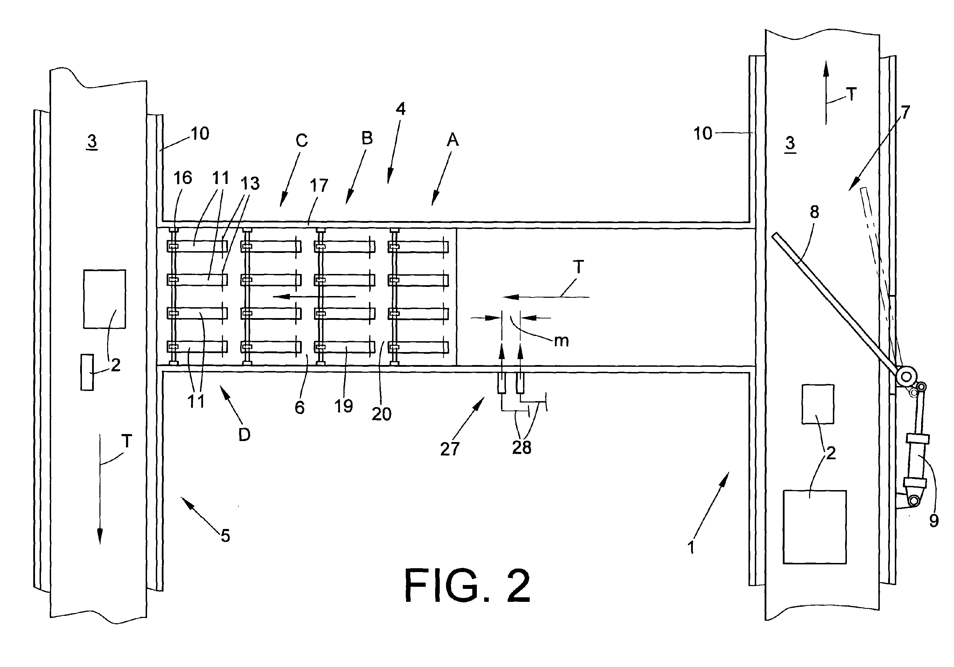

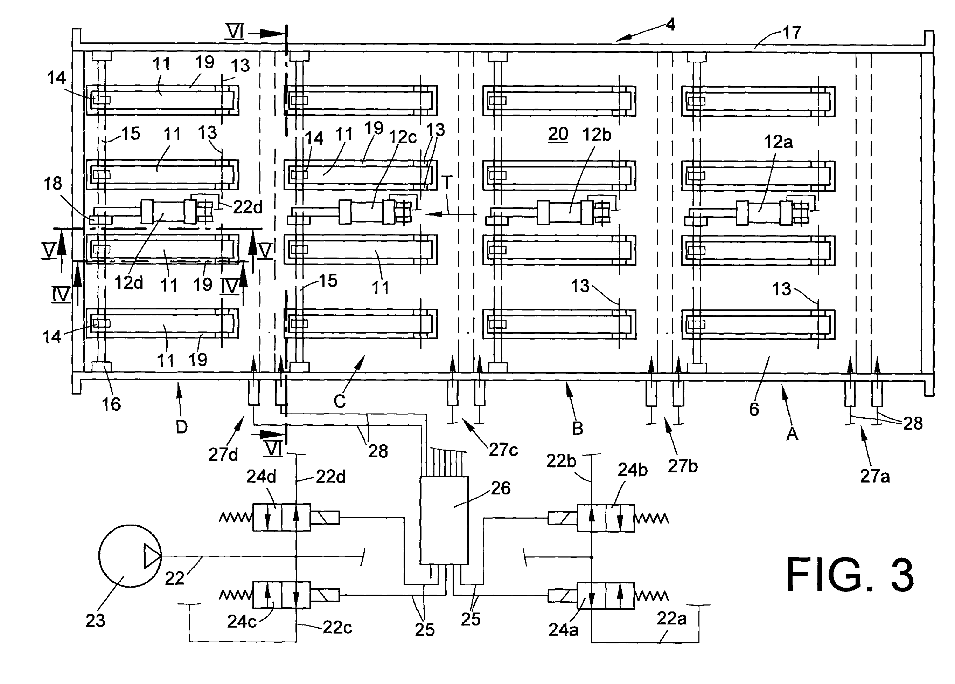

Die Figuren 1 und 2 zeigen eine Transporteinrichtung 1 zum Fördern von Stückgut 2. Die Transporteinrichtung 1 verfügt dabei beispielsweise über ein in Transportrichtung T umlaufendes Förderband 3, das, wie üblich, in einem Führungsgestell 10 abgestützt und durch einen (nicht dargestellten) Elektromotor angetrieben ist.

Die Transporteinrichtung 1 ist über eine Anschlußstrecke, die im vorliegenden Ausführungsbeispiel durch einen abschüssigen Streckenabschnitt 4 gebildet wird, mit einer tiefer angeordneten, vorzugsweise der Transporteinrichtung 1 entsprechenden Transporteinrichtung 5 verbunden.

In den abschüssigen Streckenabschnitt 4 ist dabei eine Bremseinrichtung integriert, die vorzugsweise als Bremsrutsche 6 ausgebildet ist.
Die Bremsrutsche 6 ist vorteilhafterweise endseitig des Streckenabschnittes 4 angeordnet oder der nachfolgend als Anschlußstrecke 4 bezeichnete abschüssige Streckenabschnitt ist insgesamt als Bremsrutsche 6 gestaltet.

Wie insbesondere in Figur 2 dargestellt, weist die Transporteinrichtung 1 im Anschlußbereich der Anschlußstrecke 4 eine definiert ansteuerbare Weiche 7 auf.
Diese Weiche 7, die beispielsweise einen in den Transportweg T des Stückgutes 2 einschwenkbaren Abweiser 8 aufweist, kann, vorzugsweise über ein Schubkolbengetriebe 9, so angesteuert werden, daß das Stückgut 2 von der Transporteinrichtung 1 über die Anschlußstrecke 4 zur Transporteinrichtung 5 umgeleitet wird.

Um zu vermeiden, daß das Stückgut 2 auf der abschüssigen Anschlußstrecke 4 zu sehr beschleunigt wird und anschließend unkontrolliert auf die nachfolgende Transporteinrichtung 5 "schießt", ist vorzugsweise im Endbereich der Anschlußstrecke 4 eine Bremsrutsche 6 angeordnet.

Eine solche Bremsrutsche 6, die in Figur 3 im Detail dargestellt ist, weist eine Vielzahl neben- sowie hintereinander angeordneter, definiert ansteuerbarer Bremsbalken 11 auf, die in entsprechenden Ausnehmungen 19 der Bremsrutsche 6 schwenkbar gelagert sind.
Das heißt, die Bremsbalken 11 sind im eingefahrenen Zustand Bestandteil einer ebenen Rutschfläche 20 der Bremsrutsche 6. Im ausgefahrenen Zustand bilden die Bremsbalken 11 in diesem Bereich rampenartige Erhöhungen.

Im dargestellten Ausführungsbeispiel sind vier Reihen A, B, C, D mit jeweils vier Bremsbalken 11 vorgesehen. Die Bremsbalken 11 der einzelnen Reihen A bis D werden dabei jeweils pro Reihe durch ein Schubkolbengetriebe 12 angesteuert.

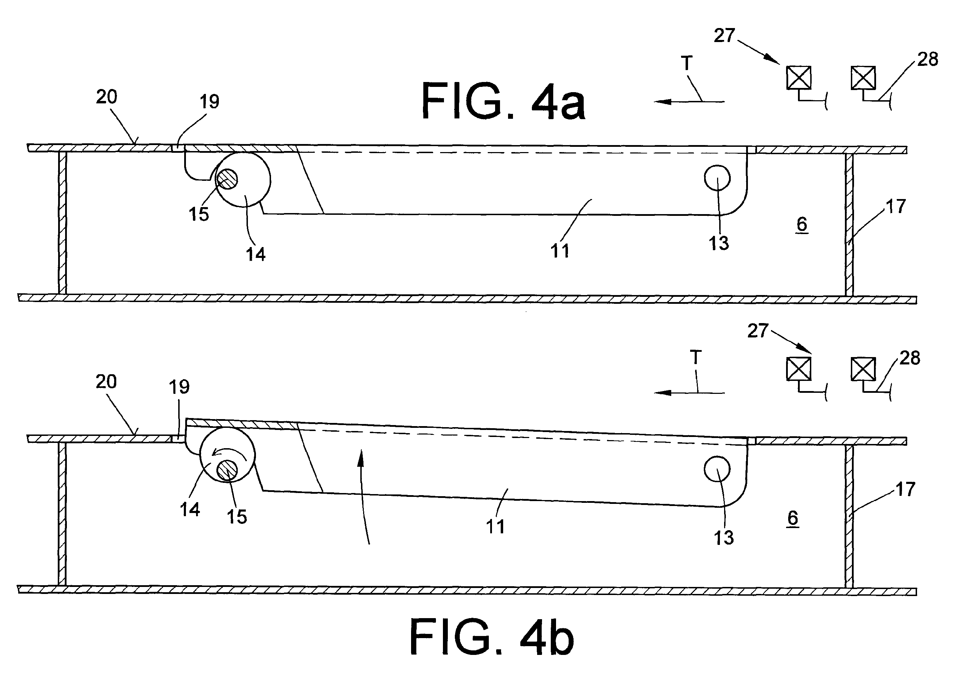

Wie insbesondere aus den Figuren 4a und 4b ersichtlich, sind die einzelnen Bremsbalken 11 um eine Schwenkachse 13 drehbar gelagert und liegen an ihrem entgegengesetzten Ende auf einer Exzenterscheibe 14 auf, die drehfest an einer Schaltwelle 15 angeordnet ist. An der Schaltwelle 15, die drehbar in entsprechenden Lagern 16 des Bremsrutschenchassis 17 gelagert ist, greift an einem Hebel 18 jeweils ein Schubkolbengetriebe 12 an. An diesem Hebel 18 ist außerdem ein Federelement 21 angelenkt, das den Hebel 18 im Sinne "Bremsbalken aufstellen " beaufschlagt.

In alternativer (nicht dargestellter) Ausführungsform kann das Federelement 21 allerdings auch direkt in das Schubkolbengetriebe 12 integriert werden und sorgt auch dann dafür, daß die Bremsbalken 11 stets ausgestellt werden, sobald das Schubkolbengetriebe 12 drucklos geschaltet wird.

Wie in Figur 3 schematisch angedeutet, sind die Schubkolbengetriebe 12a-d über entsprechende Pneumatikleitungen 22a-d an eine Überdruckquelle 23 angeschlossen. In die Pneumatikleitungen 22 sind dabei Elektromagnetventile 24a-d, vorzugsweise 2/2-Wegeventile, eingeschaltet, die über Steuerleitungen 25 mit einer Steuereinrichtung 26 verbunden sind.

Des weiteren ist wenigstens, wie in Fig.2 angedeutet, im Eingangsbereich der Bremsrutsche 6 eine Sensoreinrichtung 27 installiert, die über entsprechende Signalleitungen 28 ebenfalls an die Steuereinrichtung 26 angeschlossen ist.
Eine Sensoreinrichtung 27, zum Ermitteln der augenblicklichen Geschwindigkeit des Stückgutes 2, kann jedoch auch, wie im Ausführungsbeispiel anhand der Fig.3 angedeutet, vor jedem der Bremsbalkenreihen A, B, C, D installiert sein.

### Funktionsbeschreibung:

Wenn auf der Transporteinrichtung 1 in Transportrichtung T angeliefertes Stückgut 2 auf die tiefer angeordnete Transporteinrichtung 5 überführt werden soll, wird eine im Bereich der Anschlußstrecke 4 angeordnete Weiche 7 angesteuert. Das heißt, mittels eines Schubkolbengetriebes 9 wird beispielsweise ein Abweiser 8 in die in den Figuren 1 und 2 dargestellte Stellung geschwenkt. Das Stückgut 2 wird dann durch den Abweiser 8 auf die abschüssige Anschlußstrecke 4 umgelenkt und auf dieser Strecke schwerkraftbedingt beschleunigt.

Wie leicht verständlich, ist die Beschleunigung des Stückgutes 2 dabei um so größer, je höher das Gewicht des betreffenden Stückgutes 2 ist.

Um unabhängig vom Gewicht des Stückgutes 2 einen ordnungsgemäßen Übergang des Stückgutes 2 auf die nachgeordnete Transporteinrichtung 5 zu gewährleisten, wird das Stückgut vor dem Übergang auf die Transporteinrichtung 5 auf der Bremsrutsche 6 definiert abgebremst.

Das heißt, mittels einer Sensoreinrichtung 27, die beispielsweise kurz vor der Bremsrutsche 6 oder im Eingangsbereich der Bremsrutsche 6 angeordnet ist, wird zunächst die augenglickliche Geschwindigkeit des jeweiligen Stückgutes 2 ermittelt. Die Ermittlung der Geschwindigkeit erfolgt dabei vorzugsweise, wie bekannt, durch Messung der Zeit, die das Stückgut 2 benötigt, um eine zwischen zwei Lichtschranken angeordnete Meßstrecke (m) zu durchqueren.

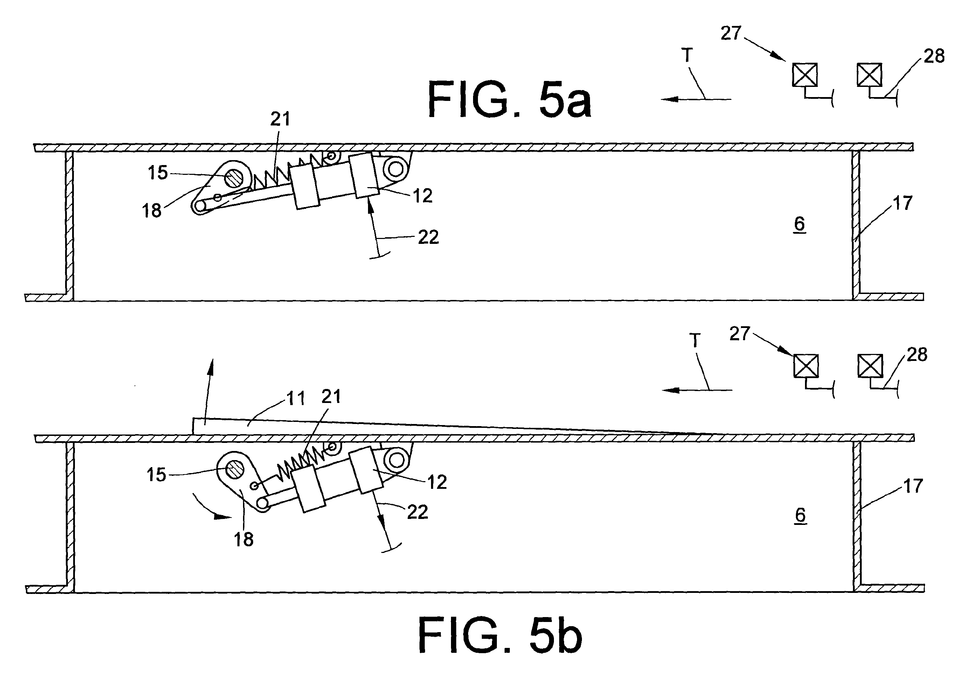

Anschließend werden abhängig von der ermittelten Geschwindigkeit durch die Steuereinrichtung 26 die Bremsbalkenreihen A, B, C, D angesteuert.
Das bedeutet, die Steuereinrichtung 26 sorgt durch entsprechende Ansteuerung der Elektromagnetventile 24a bis 24d dafür, daß die Schubkolbengetriebe 12a bis 12d die Bremsbalken 11 entweder, wie in den Figuren 4b und 5b angedeutet, in eine Bremsstellung einschwenken oder, wie in den Figur 4a und 5b dargestellt, in einer neutralen Transportstellung unterhalb der Rutschfläche 20 der Bremsrutsche 6 positioniert bleiben.

Die rampenartig angestellten Bremsbalken 11, die auf ihrer Oberfläche mit einem entsprechenden Reibbelag ausgestattet sein können, bremsen das Stückgut 2 dabei auf eine für die Übergabe des Stückgutes 2 auf die nachfolgende Transporteinrichtung 5 unkritische Geschwindigkeit herunter.

In einer vorteilhaften, alternativen Ausführungsform (Fig.3) ist vor jeder der Brembalkenreihen A bis D eine der vorbeschriebenen Sensoreinrichtungen 27a bis 27d angeordnet. Bei einer solchen Ausstattung kann die Wirksamkeit der vorhergehenden Bremsvorgänge überprüft und gegebenenfalls ein weiterer Bremsvorgang eingeleitet werden. Das heißt, mit einer derartigen Ausstattung ist ein besonders feinfühliges und schonendes Abbremsen des Stückgutes 2 möglich.

Der allgemeine Erfindungsgedanke ist nicht auf die dargestellten Ausführungsbeispiele beschränkt. Es sind, beispielsweise bezüglich der Anzahl der Bremsbalken oder deren Ansteuerung sowie bezüglich der Sensoreinrichtung, die das Stückgut vor dem Eintreffen auf der Bremsrutsche detektiert, verschiedene Varianten möglich, ohne daß dadurch der Erfindungsgedanke verlassen wird.

Anstelle einer Sensoreinrichtung, die die Geschwindigkeit des Stückgutes 2 direkt erfaßt, ist beispielsweise auch eine Sensoreinrichtung denkbar, die eine Gewichterfassung des Stückgutes durchführt. Auch in diesem Fall findet dann in der Steuereinrichtung 26 eine Berechnung der notwendigen Bremsleistung statt.
Als weitere Ausführungsform ist auch eine Sensoreinrichtung möglich, die eine auf dem Stückgut 2 angeordnete Kennzeichnung, eine sogenannten Quellencodes, erfaßt. Der Quellencode enthält in diesem Fall beispielsweise Angaben zum Gewicht des betreffenden Stückgutes 2, so daß sich auch hier die benötigte Bremsleistung der Bremsrutsche 6 leicht berechnen und feinfühlig einstellen läßt.

## Patentansprüche

1. Transporteinrichtung für Stückgüter, mit einem Transportbahnabschnitt, der Bremseinrichtungen aufweist, die bei Bedarf in eine oberhalb der Transportebene des Transportbahnabschnittes liegende Bremsstellung verlagerbar sind,
dadurch gekennzeichnet,
- daß die Transporteinrichtung einen abschüssigen Streckenabschnitt (4) mit einer Bremseinrichtung (6) aufweist,
- daß die Bremseinrichtung als Bremsrutsche (6) ausgebildet ist, mit Bremsbalken (11), die in entsprechenden Ausnehmungen (19) gelagert sind,
- daß die Bremsbalken (11) mittels einer Steuereinrichtung (26) definiert beaufschlagbar sind, wobei die Steuereinrichtung (26) Signale (i) einer wenigstens einen Zustand des jeweiligen Stückgutes (2) erfassenden Sensoreinrichtung (28) verarbeitet.

2. Transporteinrichtung nach Anspruch 1, dadurch gekennzeichnet, daß die Bremsrutsche (6) mehrere Reihen (A, B, C, D) von nebeneinander angeordneten Bremsbalken (11) aufweist, wobei mittels der Steuereinrichtung (26) jede dieser Reihen (A bis D) separat ansteuerbar ist.

3. Transporteinrichtung nach Anspruch 1 und 2, dadurch gekennzeichnet, daß die Bremsbalken (11) jeweils eine in Transportrichtung (T) des Stückgutes (2) vorne liegende Schwenkachse (13) aufweisen und mittels einer in Transportrichtung (T) hinten angeordnete Schaltwelle (15) einseitig anhebbar sind.

4. Transporteinrichtung nach einem der vorherigen Ansprüche, dadurch gekennzeichnet, daß jeder Reihe (A bis D) der Bremsbalken (11) eine gemeinsame Schaltwelle (15) zugeordnet ist.

5. Transporteinrichtung nach Anspruch 4, dadurch gekennzeichnet, daß an der Schaltwelle (15), im Bereich der Bremsbalken (11), jeweils Exzenterelemente (14) derart festgelegt sind, daß ein Verschwenken der Schaltwelle (15) zu einem endseitigen Anheben der Bremsbalken (11) führt.

6. Transporteinrichtung nach Anspruch 5, dadurch gekennzeichnet, daß wenigstens ein Federelement (21) vorgesehen ist, das die Schaltwelle (15) permanent im Sinne "Bremsbalken ausfahren" beaufschlagt.

7. Transporteinrichtung nach einem der vorherigen Ansprüche, dadurch gekennzeichnet, daß an jede Schaltwelle (15) ein Schubkolbengetriebe (12) angeschlossen ist, mittels dessen die Schaltwelle (15) im Sinne " Bremsbalken einfahren" beaufschlagbar ist.

8. Transporteinrichtung nach Anspruch 7, dadurch gekennzeichnet, daß jedes Schubkolbengetriebe (12) über eine Pneumatikleitung (22), in die ein definiert ansteuerbares Elektromagnetventil (24) eingeschaltet ist, an eine Überdruckquelle (23) angeschlossen ist.

9. Transporteinrichtung nach Anspruch 8, dadurch gekennzeichnet, daß die Elektromagnetventile (24) über Steuerleitungen (25) an die Steuereinrichtung (26) angeschlossen und entsprechend der Signale (i) der Sensoreinrichtung (28) ansteuerbar sind.

10. Transporteinrichtung nach Anspruch 1, dadurch gekennzeichnet, daß die Sensoreinrichtung (28) so ausgebildet und angeordnet ist, daß die Geschwindigkeit jedes Stückgutes (2) individuell erfaßbar ist.

11. Transporteinrichtung nach Anspruch 10, dadurch gekennzeichnet, daß vor jeder der Bremsbalkenreihen (A bis D) eine Sensoreinrichtung (28) zum Erfassen der Geschwindigkeit des Stückgutes (2) angeordnet ist.

12. Transporteinrichtung nach Anspruch 1, dadurch gekennzeichnet, daß eine Sensoreinrichtung (28) vorgesehen ist, durch die das jeweilige Gewicht des Stückgutes (2) ermittelbar ist.

13. Transporteinrichtung nach Anspruch 1, dadurch gekennzeichnet, daß eine Sensoreinrichtung (28) vorgesehen ist, durch die ein am Stückgut (2) angeordneter Quellencode, der beispielsweise Angaben über das Gewicht des Stückgutes aufweist, erfaßbar ist.
